# EUROPÄISCHE PATENTSCHRIFT

(11) **EP 3 362 700 B1**
(45) Veröffentlichungstag und Bekanntmachung des Hinweises auf die Patenterteilung: **24.06.2020**
(21) Anmeldenummer: 16781811.1
(22) Anmeldetag: 14.10.2016
(51) Int. Cl.: F16F 1/02, C09D 5/03, C09D 163/00, B05D 1/06

(54) **BESCHICHTETE FEDER**
COATED SPRING
RESSORT REVÊTU

(30) Priorität: 16.10.2015 DE 102015220230
(43) Veröffentlichungstag der Anmeldung: 22.08.2018
(73) Patentinhaber: Thyssenkrupp Federn und Stabilisatoren GmbH, 58119 Hagen (DE); thyssenkrupp AG, 45143 Essen (DE)
(72) Erfinder: LECHNER, Dieter, 40470 Düsseldorf (DE); SIMOS, Pashalis, 35745 Herborn (DE); HYMON, Kerstin, 59581 Warstein (DE); GROSS, Marcel, 44359 Dortmund (DE)
(74) Vertreter: thyssenkrupp Intellectual Property GmbH
(86) Internationale Anmeldenummer: PCT/EP2016/074777
(87) Internationale Veröffentlichungsnummer: WO 2017/064286

(56) Entgegenhaltungen:
- WO-A1-2007/138396
- WO-A1-2015/063024
- US-A1- 2002 090 823

## Beschreibung

Die vorliegende Erfindung betrifft ein elektrisch leitfähiges Bauteil, insbesondere eine Feder oder einen Drehstab für Kraftfahrzeuge, einen Schichtüberzug auf elektrisch leitfähigen Bauteilen, insbesondere Federn oder Drehstäben und ein Verfahren zum Beschichten eines elektrisch leitfähigen Bauteils, insbesondere einer Feder und/oder eines Drehstabs.

### Stand der Technik

Elektrisch leitfähige Bauteile, insbesondere mit Metalloberflächen sind im Stand der Technik in einer Vielzahl von Ausführungsformen bekannt. Meist sind elektrisch leitfähige Bauteile, insbesondere deren Oberfläche stark variierenden äußeren Bedingungen ausgesetzt, wie beispielsweise chemischen Reaktionen, insbesondere Reduktionen oder Oxidationen, physikalischen Bedingungen, insbesondere Kräften und Impulsen auf die Oberfläche der elektrisch leitfähigen Bauteile, beispielsweise (Stein)schläge und beispielsweise Umweltbedingungen, insbesondere regional und saisional unterschiedlichen Klimabedingungen, wie beispielsweise Feuchtigkeits- und Temperaturschwankungen. Bedingt durch diese variierenden Bedingungen sind konventionelle elektrisch leitfähige Bauteile anfällig gegen Oberflächenbeschädigung, insbesondere Materialbeschädigungen, Korrosion und Kombinationen hiervon. Vor diesem Hintergrund werden konventionelle elektrisch leitfähige Bauteile beschichtet. Im Stand der Technik erfolgt dies üblicherweise entweder mit einer einschichtigen Lackierung oder auch mit einer Zweischichtlackierung, bestehend aus einem Zink Primer als eine erste Schicht und einem Epoxylack als eine zweite Schicht. Problematisch bei im Stand der Technik bekannten Einschichtlackierungen und/oder Zweischichtlackierungen ist deren unzureichende (Stein)schlag- und (Kälte)schlagbeständigkeit, insbesondere bei Temperaturen unterhalb des Gefrierpunktes. Bei durch (Stein)schlag beschädigten konventionellen elektrisch leitfähigen Bauteilen ist die Zweischichtlackierung teilweise beschädigt und die Oberfläche insbesondere Materialbeschädigungen, Korrosion oder Kombinationen hiervon ausgesetzt. Insbesondere ist bei aus dem Stand der Technik durch (Kälte)schlag beschädigten elektrisch leitfähigen Bauteilen die Zweischichtlackierung teilweise abgeplatzt und die Oberfläche Korrosionsvorgängen ausgesetzt.

Aus der EP0994141B1 sind beispielsweise Beschichtungen, insbesondere Doppelbeschichtungen auf Körpern aus hochfestem Stahl bekannt.

Das Dokument WO 2015/063024 A1, welches als der nächstliegende Stand der Technik angesehen wird, offenbart die Merkmale der Oberbegriffe der unabhängigen Ansprüche.

Der vorliegenden Erfindung liegt daher die Aufgabe zugrunde, ein verbessertes elektrisch leitfähiges Bauteil, insbesondere eine verbesserte Schraubenfeder, Drehstabfeder und/oder einen Stabilisator für Kraftfahrzeuge und ein Verfahren zum Beschichten eines elektrisch leitfähigen Bauteils bereitzustellen, bei welchem die zuvor genannten Nachteile vermieden werden. Insbesondere soll mit diesem verbesserten elektrisch leitfähigen Bauteil eine im Vergleich zu konventionellen elektrisch leitfähigen Bauteilen verbesserte Beständigkeit gegen (Kälte)schlag, insbesondere unter extremen (Umwelt)bedingungen, wie beispielsweise bei Temperaturen unterhalb des Gefrierpunktes, ermöglicht werden. Zudem soll mit diesem verbesserten elektrisch leitfähigen Bauteil und insbesondere dessen Beschichtung ein im Vergleich zu konventionellen elektrisch leitfähigen Bauteilen verbessertes Energieabsorptionsvermögen, insbesondere der Beschichtung bereitgestellt werden. Des Weiteren soll die (Durch)schlagfestigkeit des verbesserten elektrisch leitfähigen Bauteils unter (Stein)schlagbeanspruchung im Vergleich zu konventionellen elektrisch leitfähigen Bauteilen wenigstens erhöht werden, insbesondere sollen Durchschläge durch die Beschichtung auf die Oberfläche des elektrisch leitfähigen Bauteils verhindert werden. Zudem soll die Materialbeschädigungsanfälligkeit, insbesondere Korrosionsanfälligkeit nach einer (Stein)schlagbeanspruchung wenigstens vermindert, insbesondere eine Korrosion dieser verbesserten elektrisch leitfähigen Bauteile verhindert werden. Des Weiteren soll mit dem verbesserten Verfahren zum Beschichten eines elektrisch leitfähigen Bauteils ein stabiler Fertigungsprozess bereitgestellt werden, welcher einfach und sicher in bereits bestehende Verfahren implementiert werden kann. Zudem soll die Möglichkeit bestehen, eine vorgegebene Stein- und/oder Kälteschlagfestigkeit dieses verbesserten elektrisch leitfähigen Bauteils gezielt einstellen zu können.

### Offenbarung der Erfindung

Diese Aufgabe wird mit einem elektrisch leitfähigem Bauteil nach Anspruch 1, einem Schichtüberzug nach Anspruch 5 und einem Verfahren zum Beschichten einer Oberfläche eines elektrisch leitfähigen Bauteils nach Anspruch 7 gelöst.

Das erfindungsgemäße elektrisch leitfähige Bauteil weist gegenüber konventionellen elektrisch leitfähigen Bauteilen eine verbesserte (Stein)- und (Kälte)schlagbeständigkeit, insbesondere bei Temperaturen unterhalb des Gefrierpunktes auf. Zudem können mit dem erfindungsgemäßen elektrisch leitfähigen Bauteil Materialeinsparungen realisiert werden bei im Vergleich zu konventionellen elektrisch leitfähigen Bauteilen gleicher oder verbesserter Stein- und Kälteschlagbeständigkeit. Insbesondere benötigt das erfindungsgemäße elektrisch leitfähige Bauteil gegenüber konventionellen elektrisch leitfähigen Bauteilen keine Zweischichtlackierung und insbesondere keinen Zink Primer mehr als eine erste Schicht.

Der erfindungsgemäße Schichtüberzug weist gegenüber konventionellen Beschichtungen bei einer gleichen oder geringeren Gesamtschichtdicke der Beschichtung eine verbesserte Stein- und Kälteschlagbeständigkeit, insbesondere bei Temperaturen unterhalb des Gefrierpunktes auf. Des Weiteren können bei dem erfindungsgemäßen Schichtüberzug im Vergleich zu konventionellen Beschichtungen Materialeinsparungen realisiert werden. Insbesondere benötigt der erfindungsgemäße Schichtüberzug keine Zweischichtlackierung und insbesondere keinen Zink Primer mehr als eine erste Schicht.

Das erfindungsgemäße Verfahren zum Beschichten einer Oberfläche eines elektrisch leitfähigen Bauteils weist gegenüber konventionellen Verfahren den Vorteil auf, dass bei gleichen oder geringeren Gesamtschichtdicken die gleiche oder eine verbesserte Stein- und Kälteschlagbeständigkeit realisiert werden können, insbesondere bei Temperaturen unterhalb des Gefrierpunktes. Zudem kann die gewünschte (Stein)schlagbeständigkeit einfach und gezielt, insbesondere über die Schichtdicke eingestellt werden. Des Weiteren ist das Auftragen der Beschichtungszusammensetzung auf die Oberfläche, insbesondere von Stahl, elektrisch leitfähigen Nichteisenmetallen, wie beispielsweise Aluminium, Kupfer, Magnesium und deren Legierungen, Kohlefaserwerkstoffen, elektrisch leitfähigen Kunststoffen, Faserverbundwerkstoffen oder Kombinationen hiervon, bei dem erfindungsgemäßen Verfahren einfacher und schneller durchführbar und kein separates Auftragssystem für eine weitere Beschichtungszusammensetzung erforderlich. Ein weiterer Vorteil des erfindungsgemäßen Verfahrens ist, dass es in bereits bestehende Verfahren einfach und zuverlässig integriert werden kann. Zudem wird bei dem erfindungsgemäßen Verfahren im Vergleich zu konventionellen Zweischichtverfahren ein Schichtauftragsschritt weniger benötigt, wobei insbesondere kein Zink Primer mehr als eine erste Schicht aufgetragen wird.

Gegenstand der Erfindung ist daher ein elektrisch leitfähiges Bauteil insbesondere für Kraftfahrzeuge umfassend eine Oberfläche mit einem Schichtüberzug, wobei der Schichtüberzug das geschmolzene und gehärtete Produkt einer Beschichtung mit einer Pulverzusammensetzung ist und der Schichtüberzug eine Schichtdicke aufweist, wobei der Schichtüberzug ein Einschichtüberzug ist und eine porenartige Schichtstruktur aufweist und die Schichtdicke von größer als 150 µm aufweist, wobei die porenartige Schichtstruktur Poren mit einem mittleren Porendurchmesser von größer als 5 µm, vorzugsweise in einem Bereich zwischen 10 µm bis 250 µm, besonders bevorzugt in einem Bereich zwischen 15 µm bis 200 µm, ganz besonders bevorzugt in einem Bereich zwischen 20 µm bis 150 µm aufweist.

Ein weiterer Gegenstand der Erfindung ist ein Schichtüberzug auf einer Oberfläche eines elektrisch leitfähigen Bauteils, wobei der Schichtüberzug das geschmolzene und gehärtete Produkt einer Beschichtung mit einer Pulverzusammensetzung ist und der Schichtüberzug eine Schichtdicke aufweist, wobei der Schichtüberzug ein Einschichtüberzug ist und eine porenartige Schichtstruktur aufweist und die Schichtdicke von größer als 150 µm aufweist, wobei die porenartige Schichtstruktur Poren mit einem mittleren Porendurchmesser von größer als 5 µm, vorzugsweise in einem Bereich zwischen 10 µm bis 250 µm, besonders bevorzugt in einem Bereich zwischen 15 µm bis 200 µm, ganz besonders bevorzugt in einem Bereich zwischen 20 µm bis 150 µm aufweist.

Insbesondere ist der Schichtüberzug auf elektrisch leitfähigen Bauteilen von Kraftfahrzeugen angeordnet.

Ein weiterer Gegenstand der Erfindung ist ein Verfahren zum Beschichten einer Oberfläche eines elektrisch leitfähigen Bauteils, insbesondere für Kraftfahrzeuge mit den Schritten:
a) Bereitstellen eines elektrisch leitfähigen Bauteils mit einer Oberfläche;
b) Bereitstellen einer Pulverzusammensetzung, umfassend wenigstens eine Bindemittelkomponente;
c) Vorbehandeln der Oberfläche des in Schritt a) bereitgestellten elektrisch leitfähigen Bauteils, wobei das Vorbehandeln als ein mechanisches und/oder chemisches Vorbehandeln durchgeführt wird;
d) Trocknen der in Schritt c) vorbehandelten Oberfläche des elektrisch leitfähigen Bauteils wenigstens bis die Oberfläche des elektrisch leitfähigen Bauteils keine Flüssigkeit, insbesondere kein Wasser aufweist;
e) Pulverbeschichten der in Schritt d) getrockneten Oberfläche des elektrisch leitfähigen Bauteils mit der in Schritt b) bereitgestellten Pulverzusammensetzung umfassend
   i. Aufladen der in Schritt b) bereitgestellten Pulverzusammensetzung;
   ii. Erden des elektrisch leitfähigen Bauteils mit der in Schritt d) getrockneten Oberfläche und Herstellen eines elektrisch leitenden Bauteils;
   iii. Auftragen, insbesondere Sprühauftragen der in Schritt i) aufgeladenen Pulverzusammensetzung auf die in Schritt d) getrocknete Oberfläche des in Schritt ii.) geerdeten elektrisch leitfähigen Bauteils;
   iv. Vernetzen, insbesondere Einbrennen der in Schritt iii. aufgetragenen Pulverzusammensetzung bei einer Vernetzungstemperatur unter Herstellen eines Schichtüberzugs, wobei eine pulverbeschichtete Oberfläche des elektrisch leitfähigen Bauteils erzeugt wird;
wobei in Schritt b) eine Pulverzusammensetzung bereitgestellt wird, welche mindestens eine Treibmittelkomponente umfasst und das Pulverbeschichten in Schritt e) einschichtig durchgeführt wird und der in Schritt e) iv. hergestellte Schichtüberzug einschichtig mit einer Schichtdicke von größer als 150 µm ausgebildet wird, wobei der in Schritt e) iv. hergestellte Schichtüberzug (7) mit einer porenartigen Schichtstruktur ausgebildet wird und der in Schritt e) iv. hergestellte Schichtüberzug (7) mit der porenartigen ausgebildeten Schichtstruktur mit Poren mit einem mittleren Porendurchmesser von größer als 5 µm, vorzugsweise in einem Bereich zwischen 10 µm bis 250 um, besonders bevorzugt in einem Bereich zwischen 15 µm bis 200 µm, ganz besonders bevorzugt in einem Bereich zwischen 20 µm bis 150 µm ausgebildet wird.

Ein weiterer Gegenstand der Erfindung ist die Verwendung eines erfindungsgemäßen Schichtüberzugs als korrosions- und abriebbeständiger Schutzüberzug für Oberflächen von elektrisch leitfähigen Bauteilen der Kraftfahrzeugindustrie, Elektro- und Elektronikindustrie, Maschinenbauindustrie, Luft- und Raumfahrt sowie für Oberflächen von elektrisch leitfähigen Bauteilen von Sportgeräten.

Die Erfindung kann sowohl in dem erfindungsgemäßen elektrisch leitfähigen Bauteil als auch in dem erfindungsgemäßen Schichtüberzug, als auch in dem erfindungsgemäßen Verfahren zum Beschichten einer Oberfläche des elektrisch leitfähigen Bauteils als auch in der erfindungsgemäßen Verwendung des erfindungsgemäßen Schichtüberzugs verwirklicht sein.

### Detaillierte Beschreibung der Erfindung

Im Rahmen der vorliegenden Erfindung wird unter elektrisch leitfähig die Fähigkeit verstanden, elektrischen Strom zu leiten und wird auch als elektrische Leitfähigkeit bezeichnet. Die elektrische Leitfähigkeit ist als physikalische Größe definiert als die Proportionalitätskonstante zwischen der Stromdichte und der elektrischen Feldstärke und die abgeleitete SI-Einheit der elektrischen Leitfähigkeit ist S/m (Siemens pro Meter). Unter einem elektrisch leitfähigen Bauteil im Rahmen der vorliegenden Erfindung wird ein Bauteil verstanden, welches die Fähigkeit aufweist, elektrischen Strom zu leiten.

Beispiele für elektrisch leitfähige Bauteile sind ausgewählt aus einer Gruppe von Schraubenfedern, insbesondere Schraubendruckfedern, Schraubenzugfedern, Kegelfedern, Sprungfedern, Biegefedern, insbesondere Spiralfedern, gewundenen Torsionsfedern, Drehstabfedern, insbesondere Stabilisatoren und Kombinationen hiervon.

Unter einer Drehstabfeder, insbesondere einem Drehstab wird im Rahmen der vorliegenden Erfindung ein stab- und/oder rohrförmiges Bauteil, insbesondere umfassend eine Kunststoff-, Kohlefaser-, Faserverbundwerkstoff-, Metallzusammensetzung oder Kombinationen hiervon verstanden, bei welchem bei fester Einspannung an beiden Enden, die befestigten Enden gegeneinander eine Schwenkbewegung um die Dreh(stabfeder)achse ausführen. Insbesondere findet die mechanische Beanspruchung maßgeblich durch ein tangential zur Dreh(stabfeder)achse angreifendes Drehmoment statt. Unter Drehstabfedern werden beispielsweise auch ein gerader Torsionsstab, ein gewinkelter Torsionsstab, eine Torsionsfeder, ein Stabilisierungsdrehstab, ein Stabilisator, ein geteilter Stabilisator und Kombinationen hiervon verstanden.

Im Rahmen der vorliegenden Erfindung wird unter einer Pulverzusammensetzung eine Zusammensetzung in partikulärer Form, welche elektrisch leitfähig, insbesondere elektrisch aufladbar ist, verstanden. Insbesondere kann eine Aufladung durch Hochspannung, wie beispielsweise einer Corona-Aufladung oder Ionisation oder durch Reibung, wie beispielsweise einer triboelektrischen oder elektrokinetischen Aufladung erfolgen. Beispielsweise kann die erfindungsgemäße Pulverzusammensetzung elektrostatisch appliziert werden. Insbesondere wird unter einer erfindungsgemäßen Pulverzusammensetzung eine Zusammensetzung mit einem Festkörperanteil von 100%, welche das Ausbilden einer Pulverlackbeschichtung ermöglicht, umfassend ein oder mehrere Bindemittel und/oder Bindemittelsysteme, verstanden. Das Hauptmerkmal der Bindemittel und/oder Bindemittelsysteme ist die Vernetzungsfähigkeit. Insbesondere werden durch Auswahl des/der Bindemittel(s) und/oder Bindemittelsysteme grundlegende Eigenschaften des nach dem Einbrennen entstehenden Lackfilmes bestimmt, wie beispielsweise Oberflächenbeschaffenheit, Härte und Stabilität. Beispielsweise sind Bindemittel und/oder Bindemittelsysteme ausgewählt aus einer Gruppe von Epoxidharzen, carboxy- und/oder hydroxygruppenhaltigen Polyestern, Acrylatharzen, insbesondere OH- und GMA-Acrylatharzen, Polyamiden, Polyethylen, Polyvinylchlorid, Polyvinylidenchloriden, Polyurethan und Kombinationen hiervon. Des Weiteren kann die Pulverzusammensetzung weitere Pulverzusammensetzungskomponenten, wie beispielsweise Additive, Farbmittel, und/oder Füllstoffe umfassen. Insbesondere beeinflussen Additive Parameter, wie beispielsweise Oberflächenbeschaffenheit, insbesondere Verlauf, Struktur, Glanz, Oberflächenhärte und Verarbeitungsbedingungen.

Beispielsweise umfasst eine Pulverzusammensetzung 73 bis 93 Gew.-% einer Epoxidharzkomponente, 5 bis 25 Gew.-% einer Elastomerkomponente und 2 bis 3 Gew.-% einer Treibmittelkomponente, bezogen auf 100 Gew.-% der Pulverzusammensetzung. Insbesondere kann eine Pulverzusammensetzung als ein weiteres Additiv eine Faserstoffkomponenten umfassen. Insbesondere ist die Elastomerkomponente ausgewählt aus einer Gruppe von Carboxyl-terminierter Butadien/Acrylnitril-Kautschuk, Bisphenol A Epoxiharzen, wie beispielsweise Poly(Bisphenol A-co-epichlorohydrin), 4,4'-(2,2-Propandiyl)diphenol-2-(chlormethyl)oxiran, Poly(Bisphenol A-co-epichlorohydrin), glycidyl end-capped und Kombinationen hiervon.

Unter einem Einschichtüberzug wird im Rahmen der vorliegenden Erfindung ein Schichtüberzug verstanden, welcher über den gesamten räumlichen Bereich des Schichtüberzugs die gleichartigen chemischen Eigenschaften aufweist. Insbesondere weist ein Einschichtüberzug eine einzige Zusammensetzung und keine/n Schichtübergang/gänge auf. Beispielsweise ist über den gesamten räumlichen Bereich des Einschichtüberzugs die Zusammensetzung, insbesondere die Materie des Einschichtüberzugs homogen. Insbesondere ist unter einem Einschichtüberzug auch eine durch mehrlagiges Auftragen einer homogenen Pulverzusammensetzung, welche bei einem Vernetzungsvorgang zu einer einzigen Schicht vernetzt wird, hergestellter Schichtüberzug zu verstehen.

Im Rahmen der vorliegenden Erfindung wird unter einer Schichtdicke die Höhendifferenz zwischen der Außenmantelfläche des Einschichtüberzugs und der Außenmantelfläche des elektrisch leitfähigen Bauteils verstanden.

Üblicherweise kann die Messung der Schichtdicke, insbesondere Schichtstärke bei Metalluntergründen mit materialzerstörenden und/oder zerstörungsfreien Methoden durchgeführt werden. Insbesondere wird bei einer materialzerstörenden Methoden ein Schliff des mit einem Schichtüberzug beschichteten elektrisch leitfähigen Bauteils angefertigt und die Schichtdicke bei einer optisch vergrößerten Betrachtung des Schliffes, wie beispielsweise unter einem Mikroskop ausgemessen. Bei zerstörungsfreien Messmethoden ist die Messgenauigkeit im Vergleich zu den materialzerstörenden Methoden üblicherweise geringer. Die den zerstörungsfreien Messmethoden zugrundeliegenden Verfahren sind beispielsweise die magnetisch-induktive Messung für Stahluntergründe und die Messung per Wirbelstromverfahren für Untergründe aus anderen Metallen.

In einer weiteren bevorzugten Ausführungsform des elektrisch leitfähigen Bauteils weist der Schichtüberzug die Schichtdicke vorzugsweise in einem Bereich zwischen 200 µm bis 2000 µm, besonders bevorzugt in einem Bereich zwischen 250 µm bis 1500 µm, ganz besonders bevorzugt in einem Bereich zwischen 300 µm bis 900 µm auf.

In einer weiteren bevorzugten Ausführungsform des elektrisch leitfähigen Bauteils umfasst der Schichtüberzug weniger als 3 Gewichts-% eines oder mehrerer Korrosionsinhibitors/en, bezogen auf den Schichtüberzug.

Unter einem Korrosionsinhibitor wird im Rahmen der vorliegenden Erfindung eine Zusammensetzung verstanden, welche die Korrosionsgeschwindigkeiten von Metallen und Metallverbindungen verringern, insbesondere inhibieren. Insbesondere werden Korrosionsschutzpigmente eingesetzt. Beispielsweise sind Korrosionsschutzpigmente ausgewählt aus einer Gruppe von Zinkverbindungen, insbesondere deren Hydroxiden, Oxiden sowie Carbonaten wie beispielsweise ausgewählt unter Diethylzink, Zamak, Zinkacetat, Zinkchlorid, Zinkoxid, Zinksulfid, Zinkstearat, Zinkcarbonat, Phosphatverbindungen, insbesondere Aluminiumorthophosphatverbindungen, Aluminiumdihydrogentriphosphat, Ruß und Kombinationen hiervon.

Im Rahmen der vorliegenden Erfindung wird unter einer Treibmittelkomponente eine Zusammensetzung verstanden, welche mindestens beim Vernetzen der aufgetragenen Pulverzusammensetzung in Schritt e) iv. mindestens ein Gas freisetzt. Insbesondere bildet freigesetztes Gas Blasen vorzugsweise bei Vernetzungsvorgängen. Beispielsweise kann die Treibmittelkomponente ausgewählt sein aus einer Gruppe von N,N-Azobisisobutyro-nitrilen, insbesondere 2,2'-Azobisisobutyronitril, Nitroisopentamethylentertraminen, insbesondere Dinitroisopentamethylentertramin, Toluolsulfonyl Hydrazin, insbesondere 4-Methylbenzolsulfonohydrazid, Hydrogen Carbonaten, Kohlensäurediammoniat, Siliconhydroxiden, Azodicarboxamid, Natriumtetrahydroborat, Aluminiumtrihydrat, Phosphatverbindungen, insbesondere Diposphaten, Triphosphaten, Polyphosphaten und Kombinationen hiervon.

Insbesondere wird durch die Freisetzung des mindestens einen Gases eine porenartigen Schichtstruktur ausgebildet, welche eine um mindestens 15 %, vorzugsweise 20 bis 70 %, besonders bevorzugt 25 bis 60 %, ganz besonders bevorzugt 30 bis 50 % verminderte Dichte in Bezug auf die Dichte des Schichtüberzugs ohne die porenartige Schichtstruktur aufweist.

In einer weiteren bevorzugten Ausführungsform ist das elektrisch leitfähige Bauteil hergestellt nach einem Verfahren mit den folgenden Schritten:
a) Bereitstellen eines elektrisch leitfähigen Bauteils mit einer Oberfläche;
b) Bereitstellen einer Pulverzusammensetzung, umfassend wenigstens eine Bindemittelkomponente;
c) Vorbehandeln der Oberfläche des in Schritt a) bereitgestellten elektrisch leitfähigen Bauteils, wobei das Vorbehandeln als ein mechanisches und/oder chemisches Vorbehandeln durchgeführt wird;
d) Trocknen der in Schritt c) vorbehandelten Oberfläche des elektrisch leitfähigen Bauteils wenigstens bis die Oberfläche des elektrisch leitfähigen Bauteils keine Flüssigkeit, insbesondere kein Wasser aufweist;
e) Pulverbeschichten der in Schritt d) getrockneten Oberfläche des elektrisch leitfähigen Bauteils mit der in Schritt b) bereitgestellten Pulverzusammensetzung umfassend
   i. Aufladen der in Schritt b) bereitgestellten Pulverzusammensetzung;
   ii. Erden des elektrisch leitfähigen Bauteils mit der in Schritt d) getrockneten Oberfläche und Herstellen eines elektrisch leitenden Bauteils;
   iii. Auftragen, insbesondere Sprühauftragen der in Schritt i. aufgeladenen Pulverzusammensetzung auf die in Schritt d) getrocknete Oberfläche des in Schritt ii. geerdeten elektrisch leitenden Bauteils;
   iv. Vernetzen, insbesondere Einbrennen der in Schritt iii. aufgetragenen Pulverzusammensetzung bei einer Vernetzungstemperatur unter Herstellen eines Schichtüberzugs, wobei eine pulverbeschichtete Oberfläche des elektrisch leitfähigen Bauteils erzeugt wird;
wobei das Pulverbeschichten in Schritt e) einschichtig durchgeführt wird und der in Schritt e) iv. hergestellte Schichtüberzug einschichtig ausgebildet wird und nach wenigstens einer Stahlkugel-Schlagbolzen-Schlagprüfung nach DIN ISO 4532 von Oktober 1995 auf den in Schritt e) iv. hergestellten Schichtüberzug im Bereich einer Auftreffstelle der Stahlkugel keinen Durchschlag auf die (Stahl)oberfläche des elektrisch leitfähigen Bauteils aufweist, wobei als Federkraft des Schlagbolzens 90 N eingestellt wird und der Schichtüberzug der/des bei der wenigstens einen Stahlkugel-Schlagbolzen-Schlagprüfung geprüften beschichteten elektrisch leitfähigen Bauteils auf eine Temperatur von -40°C temperiert wird.

Für eine Temperierung auf -40°C wird das zu prüfende beschichtete elektrisch leitfähige Bauteil bei einer Temperatur von -40°C +/-3 °C für wenigstens 24 h gelagert.

In einer weiteren bevorzugten Ausführungsform ist das elektrisch leitfähige Bauteil hergestellt nach einem Verfahren mit den folgenden Schritten:
a) Bereitstellen eines elektrisch leitfähigen Bauteils mit einer Oberfläche;
b) Bereitstellen einer Pulverzusammensetzung, umfassend wenigstens eine Bindemittelkomponente;
c) Vorbehandeln der Oberfläche des in Schritt a) bereitgestellten elektrisch leitfähigen Bauteils, wobei das Vorbehandeln als ein mechanisches und/oder chemisches Vorbehandeln durchgeführt wird;
d) Trocknen der in Schritt c) vorbehandelten Oberfläche des elektrisch leitfähigen Bauteils wenigstens bis die Oberfläche des elektrisch leitfähigen Bauteils keine Flüssigkeit, insbesondere kein Wasser aufweist;
e) Pulverbeschichten der in Schritt d) getrockneten Oberfläche des elektrisch leitfähigen Bauteils mit der in Schritt b) bereitgestellten Pulverzusammensetzung umfassend
   v. Aufladen der in Schritt b) bereitgestellten Pulverzusammensetzung;
   vi. Erden des elektrisch leitfähigen Bauteils mit der in Schritt d) getrockneten Oberfläche und Herstellen eines elektrisch leitenden Bauteils;
   vii. Auftragen, insbesondere Sprühauftragen der in Schritt i. aufgeladenen Pulverzusammensetzung auf die in Schritt d) getrocknete Oberfläche des in Schritt ii. geerdeten elektrisch leitenden Bauteils;
   viii. Vernetzen, insbesondere Einbrennen der in Schritt iii. aufgetragenen Pulverzusammensetzung bei einer Vernetzungstemperatur unter Herstellen eines Schichtüberzugs, wobei eine pulverbeschichtete Oberfläche des elektrisch leitfähigen Bauteils erzeugt wird;
wobei das Pulverbeschichten in Schritt e) einschichtig durchgeführt wird und der in Schritt e) iv. hergestellte Schichtüberzug einschichtig ausgebildet wird und nach wenigstens einer Stahlkugel-Schlagbolzen-Schlagprüfung nach DIN ISO 4532 von Oktober 1995 auf den in Schritt e) iv. hergestellten Schichtüberzug im Bereich einer Auftreffstelle der Stahlkugel die (Stahl)oberfläche des elektrisch leitfähigen Bauteils wenigstens teilweise freigelegt ist, wobei die teilweise freigelegte (Stahl)oberfläche eine Länge von weniger als 2 mm, vorzugsweise weniger als 1,6 mm, besonders bevorzugt von weniger als 1,4 mm, ganz besonders bevorzugt von weniger als 1,2 mm aufweist, wobei als Federkraft des Schlagbolzens 90 N eingestellt wird und der Schichtüberzug der/des bei der wenigstens einen Stahlkugel-Schlagbolzen-Schlagprüfung geprüften beschichteten elektrisch leitfähigen Bauteils auf eine Temperatur von -40°C temperiert wird.

Für eine Temperierung auf -40°C wird das zu prüfende beschichtete elektrisch leitfähige Bauteil bei einer Temperatur von -40°C +/-3 °C für wenigstens 24 h gelagert.

In einer weiteren bevorzugten Ausführungsform ist das elektrisch leitfähige Bauteil hergestellt nach einem Verfahren mit den folgenden Schritten:
a) Bereitstellen eines elektrisch leitfähigen Bauteils mit einer Oberfläche;
b) Bereitstellen einer Pulverzusammensetzung, umfassend wenigstens eine Bindemittelkomponente;
c) Vorbehandeln der Oberfläche des in Schritt a) bereitgestellten elektrisch leitfähigen Bauteils, wobei das Vorbehandeln als ein mechanisches und/oder chemisches Vorbehandeln durchgeführt wird;
d) Trocknen der in Schritt c) vorbehandelten Oberfläche des elektrisch leitfähigen Bauteils wenigstens bis die Oberfläche des elektrisch leitfähigen Bauteils keine Flüssigkeit, insbesondere kein Wasser aufweist;
e) Pulverbeschichten der in Schritt d) getrockneten Oberfläche des elektrisch leitfähigen Bauteils mit der in Schritt b) bereitgestellten Pulverzusammensetzung umfassend
   i. Aufladen der in Schritt b) bereitgestellten Pulverzusammensetzung;
   ii. Erden des elektrisch leitfähigen Bauteils mit der in Schritt d) getrockneten Oberfläche und Herstellen eines elektrisch leitenden Bauteils;
   iii. Auftragen, insbesondere Sprühauftragen der in Schritt i. aufgeladenen Pulverzusammensetzung auf die in Schritt d) getrocknete Oberfläche des in Schritt ii. geerdeten elektrisch leitenden Bauteils;
   iv. Vernetzen, insbesondere Einbrennen der in Schritt iii. aufgetragenen Pulverzusammensetzung bei einer Vernetzungstemperatur unter Herstellen eines Schichtüberzugs, wobei eine pulverbeschichtete Oberfläche des elektrisch leitfähigen Bauteils erzeugt wird;
wobei das Pulverbeschichten in Schritt e) einschichtig durchgeführt wird und der in Schritt e) iv. hergestellte Schichtüberzug einschichtig ausgebildet wird und nach einer (Stein)schlagprüfung die Stahloberfläche in dem geprüften Bereich von dem Schichtüberzugs überdeckt ist, wobei bei der (Stein)schlagprüfung mindestens ein zwischen zwei Rädern beschleunigtes Strahlmittel wenigstens auf den zu prüfenden Bereich des Schichtüberzugs für 60s bestrahlt wird und die Umfangsgeschwindigkeit der Räder 80km/h, die Menge an Strahlmittel 200g und das bestrahlte elektrisch leitfähige Bauteil mit der Drehzahl von 30min⁻¹ rotiert.

Insbesondere wird als Strahlmittel ein Basaltsplit mit einer Körnung im Bereich von 2 bis 5 einsetzbar in Asphalt überwacht nach RGmin, verstanden. Als Abstand zwischen den zwei Rädern zu dem zu prüfenden elektrisch leitfähigen Bauteil werden von der Mitte einer gedachten Linie zwischen den Mittelpunkten der zwei Räder lotrecht bis zu dem Mittelpunkt des zu prüfenden elektrisch leitfähigen Bauteils 350 mm eingestellt.

Zur Prüfung, ob die (Stahl)oberfläche in dem geprüften Bereich von dem Schichtüberzug überdeckt ist, wird vorzugsweise eine Korrosionsprüfung in künstlichen Atmosphären - Salzsprühnebelprüfung gemäß DIN EN ISO 9227 durchgeführt.

Nach einer weiteren bevorzugten Ausführungsform weist der Schichtüberzug die Schichtdicke vorzugsweise in einem Bereich zwischen 200 µm bis 2000 µm, besonders bevorzugt in einem Bereich zwischen 250 µm bis 1500 µm, ganz besonders bevorzugt in einem Bereich zwischen 300 µm bis 900 µm auf.

Gemäß einer weiteren bevorzugten Ausführungsform umfasst der Schichtüberzug weniger als 3 Gewichts-% eines oder mehrerer Korrosionsinhibitors/en, bezogen auf den Schichtüberzug.

In einer weiteren vorteilhaften Ausführungsform der Erfindung weist der Schichtüberzug mit der porenartigen Schichtstruktur eine um mindestens 15 %, vorzugsweise 20 bis 70 %, besonders bevorzugt 25 bis 60 %, ganz besonders bevorzugt 30 bis 50 % verminderte Dichte in Bezug auf die Dichte des Schichtüberzugs ohne die porenartige Schichtstruktur auf.

Gemäß der Erfindung weist die porenartige Schichtstruktur Poren mit einem mittleren Porendurchmesser von größer als 5 µm, vorzugsweise in einem Bereich zwischen 10 µm bis 250 µm, besonders bevorzugt in einem Bereich zwischen 15 µm bis 200 µm, ganz besonders bevorzugt in einem Bereich zwischen 20 µm bis 150 µm auf. Insbesondere sind die mittleren Porendurchmesser in einem Bereich zwischen 60 µm bis 75 µm.

In einer bevorzugten Ausführungsform der Erfindung weist der Schichtüberzug keinen Korrosionsinhibitor, insbesondere keine Zinkkomponente, wie beispielsweise Zinkpulver auf.

Gemäß einer weiteren bevorzugten Ausführungsform der Erfindung weist der Schichtüberzug mindestens 10 Gewichts-%, vorzugsweise 15 bis 90 Gewichts-%, besonders bevorzugt 20 bis 80 Gewichts-%, ganz besonders bevorzugt 25 bis 75 Gewichts-% einer Faserkomponente, bezogen auf den Schichtüberzug, auf.

Im Rahmen der vorliegenden Erfindung wird unter einer Faserkomponente eine Komponente verstanden, welche den Schichtüberzug, insbesondere die Matrix des Schichtüberzugs strukturell mit Fasern verstärkt. Die Faserkomponente ist beispielsweise ausgewählt aus einer Gruppe von Glasfasern, Aramidfasern, insbesondere Fasern aus Poly(p-phenylenterephthalamid, Poly(m-phenylenterephthalamid, Polyhalogenolefinfasern, insbesondere Fasern aus Polytetrafluorethylen, Polychlortrifluorethylen, Kohlenstofffasern und Kombinationen hiervon.

Nach einer weiteren möglichen Ausführungsform der Erfindung weist der Schichtüberzug wenigstens eine Epoxidharzkomponente auf.

Unter einem mechanischen Vorbehandeln wird im Rahmen der vorliegenden Erfindung eine Oberflächenvergrößerung, insbesondere Aufrauhung der Oberfläche und/oder eine Verdichtung der Oberfläche des elektrisch leitfähigen Bauteils verstanden. Beispielsweise kann eine mechanische Vorbehandlung durch Strahlverfahren, insbesondere Kugelstrahlung durchgeführt werden.

Im Rahmen der vorliegenden Erfindung wird unter einem chemischen Vorbehandeln das Ausbilden einer Konversionsoberfläche auf der Oberfläche des elektrisch leitfähigen Bauteils verstanden. Insbesondere deckt die ausgebildete Konversionsoberfläche die Oberfläche des elektrisch leitfähigen Bauteils ab. Beispielsweise wird das chemische Vorbehandeln als ein Phosphatieren durchgeführt.

Nach einer weiteren bevorzugten Ausführungsform wird der in Schritt e) iv. hergestellte einschichtige Schichtüberzug mit einer Schichtdicke, vorzugsweise in einem Bereich zwischen 200 µm bis 2000 µm, besonders bevorzugt in einem Bereich zwischen 250 µm bis 1500 µm, ganz besonders bevorzugt in einem Bereich zwischen 300 µm bis 900 µm ausgebildet.

Gemäß einer weiteren bevorzugten Ausführungsform wird in Schritt b) eine Pulverzusammensetzung bereitgestellt, welche weniger als 3 Gewichts-% eines oder mehrerer Korrosionsinhibitors/en, bezogen auf den Schichtüberzug umfasst.

In einer bevorzugten Ausführungsform der Erfindung wird bei dem Pulverbeschichten in Schritt e) der in Schritt e) iv. hergestellte Schichtüberzug mit einer porenartigen Schichtstruktur ausgebildet.

Gemäß einer weiteren bevorzugten Ausführungsform der Erfindung wird der in Schritt e) iv. hergestellte Schichtüberzug mit der porenartigen ausgebildeten Schichtstruktur mit einer um mindestens 15 %, vorzugsweise 20 bis 70 %, besonders bevorzugt 25 bis 60 %, ganz besonders bevorzugt 30 bis 50 % verminderten Dichte in Bezug auf die Dichte des Schichtüberzugs ohne die porenartige Schichtstruktur ausgebildet.

Gemäß einer weiteren, möglichen Ausführungsform der Erfindung wird bei dem Pulverbeschichten in Schritt e) der in Schritt e) iv. hergestellte Schichtüberzug mit einer porenartigen Schichtstruktur ausgebildet und der in Schritt e) iv. hergestellte Schichtüberzug mit der porenartigen ausgebildeten Schichtstruktur mit einer um mindestens 15 %, vorzugsweise 20 bis 70 %, besonders bevorzugt 25 bis 60 %, ganz besonders bevorzugt 30 bis 50 % verminderten Dichte in Bezug auf die Dichte des Schichtüberzugs ohne die porenartige Schichtstruktur ausgebildet.

Gemäß der Erfindung wird der in Schritt e) iv. hergestellte Schichtüberzug mit der porenartigen ausgebildeten Schichtstruktur mit Poren mit einem mittleren Porendurchmesser von größer als 5 µm, vorzugsweise in einem Bereich zwischen 10 µm bis 250 µm, besonders bevorzugt in einem Bereich zwischen 15 µm bis 200 µm, ganz besonders bevorzugt in einem Bereich zwischen 20 µm bis 150 µm ausgebildet.

In einer bevorzugten Ausführungsform der Erfindung erfolgt das Erden des elektrisch leitfähiges Bauteils in Schritt e) ii) als ein Schritt weiter vorne in der Reihenfolge, insbesondere nach dem Bereitstellen eines elektrisch leitfähigen Bauteils in Schritt a).

Gemäß einer weiteren bevorzugten Ausführungsform der Erfindung wird vor dem Pulverbeschichten in Schritt e) in einem weiteren Schritt g) ein Erwärmen, insbesondere des in Schritt d) getrockneten elektrisch leitfähigen Bauteils wenigstens auf eine Erwärmungstemperatur durchgeführt, wobei die Erwärmungstemperatur eine Temperatur in einem Bereich von 30 °C unterhalb der Gelierstarttemperatur bis zur Vernetzungsendtemperatur der in Schritt b) bereitgestellten Pulverzusammensetzung ist. Beispiele für Gelierstarttemperaturen sind größer als 50 °C, vorzugsweise in einem Bereich zwischen 70 °C bis 140 °C.

Im Rahmen der vorliegenden Erfindung wird unter Gelierstarttemperatur die Temperatur verstanden, bei welcher die Gelbildung der bereitgestellten Pulverzusammensetzung beginnt. Insbesondere ist die Gelbildung der Beginn der Vernetzung einer oder mehrerer Komponenten der bereitgestellten Pulverzusammensetzung.

Unter Vernetzungsendtemperatur Im Rahmen der vorliegenden Erfindung wird die maximale Temperatur verstanden, bei welcher noch keine Zersetzung einzelner und/oder mehrerer Komponenten der Pulverzusammensetzung erfolgt. Insbesondere nehmen die mechanischen Eigenschaften, wie beispielsweise die Haftung des Schichtüberzugs an der Oberfläche des elektrisch leitfähigen Bauteils bei Überschreiten der Vernetzungstemperatur ab.

In einer bevorzugten Ausführungsform der Erfindung wird in Schritt b) eine Pulverzusammensetzung bereitgestellt, welche keinen Korrosionsinhibitor, insbesondere keine Zinkkomponente, wie beispielsweise Zinkpulver umfasst.

Gemäß einer weiteren bevorzugten Ausführungsform der Erfindung wird in Schritt b) eine Pulverzusammensetzung bereitgestellt, welche wenigstens eine Faserkomponente umfasst und wobei bei dem Pulverbeschichten in Schritt e) der in Schritt iv. hergestellte Schichtüberzug mit mindestens 10 Gewichts-%, vorzugsweise 15 bis 90 Gewichts-%, besonders bevorzugt 20 bis 80 Gewichts-%, ganz besonders bevorzugt 25 bis 75 Gewichts-% der Faserkomponente, bezogen auf den hergestellten Schichtüberzug ausgebildet wird.

Gemäß einer weiteren bevorzugten Ausführungsform der Erfindung wird in der in Schritt b) bereitgestellten Pulverzusammensetzung eine Epoxidharzkomponente als wenigstens eine Bindemittelkomponente bereitgestellt.

### Kurze Beschreibung der Beispiele und Zeichnungen

Das erfindungsgemäße elektrisch leitfähige Bauteil wird beispielhaft als erfindungsgemäße Feder oder erfindungsgemäßer Drehstab anhand der Beispiele und Zeichnungen erläutert.
- Fig. 1: zeigt schematisch eine umgeformte Feder einen Drehstab und einen umgeformten Stabilisator gemäß dem Stand der Technik,
- Fig. 2: zeigt schematisch eine Schrägansicht eines Metallrohrelements oder eines Metallstabelements einer Feder oder eines Drehstabs gemäß einer Ausführungsform der Erfindung.

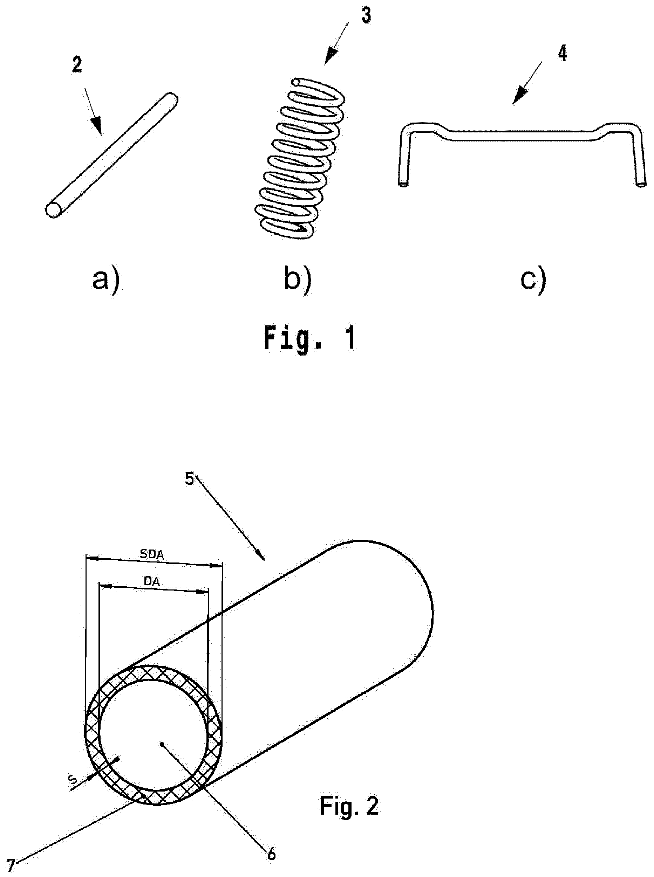

In der Fig. 1 sind mit den Bezeichnungen a) bis c) unterschiedliche Federn nach dem Stand der Technik dargestellt. Unter a) ist eine Drehstabfeder 2 dargestellt. Die Bezeichnung b) stellt eine Schraubenfeder 3 und c) einen Stabilisator 4 dar.

In der Fig. 2 ist eine Schrägansicht eines mit einem Schichtüberzug 7 beschichteten Metallrohrelements oder eines Metallstabelements 5 einer Feder oder eines Drehstabs nach einer Ausführungsform der Erfindung dargestellt. Das Metallrohrelement oder das Metallstabelement 5 weist einen Außendurchmesser DA auf. Der Schichtüberzug 7 ist an der Außenmantelfläche des Metallrohrelements oder des Metallstabelements 5 angeordnet und weist eine Schichtdicke S mit einem Außendurchmesser des Schichtüberzugs SDA auf. Die Schichtdicke S ist die Hälfte der Differenz zwischen dem Außendurchmesser des Schichtüberzugs SDA und dem Außendurchmesser DA.

### Beispiel 1:

In Beispiel 1 wurde ein Steinschlagbeschuss mit 80km/h durchgeführt und die nachfolgende Korrosionsprüfung gemäß DIN EN ISO 9227 durchgeführt.

Die Steinschlag-Prüfung wurde unter folgenden Bedingungen durchgeführt:
- Umfangsgeschwindigkeit des Antriebsrades: 80 km/h,
- Prüfdauer: 60 s,
- Prüfabstand: 350 mm,
- Strahlmittel: Basaltsplit Körnung 2 bis 5,
- Strahlmittelmenge: 200g,
- Drehzahl des bestrahlten Bauteiles: 30 U/min

Anschließend wurden die zu prüfenden Bauteile für 72 Stunden in der Salz-Sprüh-Kammer eingelagert.

In der nachfolgenden Tabelle 1 sind die Ergebnisse für 5 Federn, welche mit der erfindergemäßen Beschichtung beschichtet wurden, dargestellt.

**Tab. 1: Ergebnisse für 5 Federn, welche mit der erfindergemäßen Beschichtung beschichtet wurden.**

| Feder Nr.: | Durchschläge bis zum Grundmaterial | Blasenbildung, Blasengrad | Rostgrad |
|---|---|---|---|
| 2015_190_V2_1 | 0 | 0 (SO) | Ri 0 |
| 2015_190_V4_1 | 0 | 0 (SO) | Ri 0 |
| 2015_190_V4_2 | 0 | 0 (SO) | Ri 0 |
| 2015_190_V6_1 | 0 | 0 (SO) | Ri 0 |
| 2015_190_V7_1 | 0 | 0 (SO) | Ri 0 |

### Beispiel 2:

In Beispiel 2 wurde ein Steinschlagbeschuss mit 80km/h durchgeführt und die nachfolgende Korrosionsprüfung gemäß DIN EN ISO 9227 durchgeführt.

Die Steinschlag-Prüfung wurde unter folgenden Bedingungen durchgeführt:
- Umfangsgeschwindigkeit des Antriebsrades: 80 km/h,
- Prüfdauer: 60 s,
- Prüfabstand: 350 mm,
- Strahlmittel: No. 7 crushed stone of JIS A 5001,
- Strahlmittelmenge: 200g,
- Drehzahl des bestrahlten Bauteiles: 2 U/min.

Anschließend wurden die zu prüfenden Bauteile für 24 Stunden in der Salz-Sprüh-Kammer eingelagert.

Test Bedingungen in der Salz-Sprüh-Kammer:
- Temperatur in der Kammer: 35 ± 2 °C,
- Luft Befeuchtungs Temperatur: 47 ± 1 °C,
- Sprühdruck: 70 bis 170 kPa,
- Menge: 1 bis 2,0 ml/h per 80 cm²,
- pH: 6,5 bis 7,2 (33 to 35 °C)

In der nachfolgenden Tabelle 2 sind die Ergebnisse für 4 Federn (Feder 1 bis 4), die mit dem erfindergemäßen Schichtüberzug beschichtet wurden abgebildet. Zusätzlich sind die Ergebnisse für 4 Federn (Feder 5 bis 8), welche mit einer im Stand der Technik üblichen Einschichtanordnung beschichtet wurden, dargestellt. Sehr deutlich sind die guten Ergebnisse beim Rostgrad mit dem erfindungsgemäßen Schichtüberzug gegenüber einer im Stand der Technik üblichen Beschichtung zu erkennen. Ein Rostgrad Ri von 0 steht für das Fehlen von Rost und bedeutet, dass keine Korrosion der Feder erfolgt ist. Die Rostgrade Ri von 2,5 und 3 zeigen, dass Rost an den geprüften Federn vorhanden war und somit eine Korrosion der Federn erfolgt ist.

**Tab. 2: Gegenüberstellung der erfindungsgemäßen Federn mit dem erfindungsgemäßen Schichtüberzug im Vergleich zu einer Beschichtung nach dem Stand der Technik.**

| Feder Nr.: | Rostgrad | Beschichtung |
|---|---|---|
| 1 | Ri 0 | erfindungsgemäße Beschichtung |
| 2 | Ri 0 | erfindungsgemäße Beschichtung |
| 3 | Ri 0 | erfindungsgemäße Beschichtung |
| 4 | Ri 0 | erfindungsgemäße Beschichtung |
| | | |
| 5 | Ri 3 | Einschichtanordnung |
| 6 | Ri 3 | Einschichtanordnung |
| 7 | Ri 2,5 | Einschichtanordnung |
| 8 | Ri 3 | Einschichtanordnung |

### Beispiel 3:

In Beispiel 3 wurde die Kälteschlag-Prüfung nach der TL 261 unter nachfolgenden Bedingungen durchgeführt:
Die Feder wurden zur Prüfung 24 h bei (-40 ± 3) °C gelagert. Nach Ende der Lagerungszeit wurde in der Kälte ein Schlagversuch in Anlehnung an DIN ISO 4532 (mit 90 N Prüfkraft auf starrer Unterlage) durchgeführt.

In der Tabelle 3 sind die Ergebnisse für 2 Federn, die mit der erfindergemäßen Beschichtung beschichtet wurden, zu sehen. Jede Feder wurde viermal getestet. Mit Durchschlag-Ø ist die maximal gemessene Länge der bei einem Einschlag teilweise freigelegten Stahloberfläche bezeichnet. Aus der Tabelle ist zu entnehmen, dass bei keiner der 2 geprüften Federn unter viermaligem Beschuss ein Durchschlag der Stahlkugel auf die Stahloberfläche der Federn verzeichnet wurde. Als Schichtdicke links bzw. rechts ist die jeweils links bzw. rechts neben dem Einschlag der geschossenen Stahlkugel gemessene Schichtdicke bezeichnet.

**Tab. 3: Ergebnisse der Kälteschlag-Prüfung mit viermaligem Beschuss von 2 erfindungsgemäß beschichteten Federn.**

| | Feder 2015_164_P VIII | | | |
|---|---|---|---|---|
| Beschuss | Durchschlag Ø [mm] | Schicht-Abplatzungen | Schichtdicke links [µm] | Schichtdicke rechts [µm] |
| Beschuss 1 | 0,0 | Keine | 905 | 870 |
| Beschuss 2 | 0,0 | Keine | 806 | 803 |
| Beschuss 3 | 0,0 | Keine | 771 | 754 |
| Beschuss 4 | 0,0 | Keine | 851 | 837 |

| | Feder 2015_164_3 | | | |
|---|---|---|---|---|
| Beschuss | Durchschlag Ø [mm] | Schicht-Abplatzungen | Schichtdicke links µm | Schichtdicke rechts [µm] |
| Beschuss 1 | 0,0 | Keine | 1049 | 1002 |
| Beschuss 2 | 0,0 | Keine | 809 | 853 |
| Beschuss 3 | 0,0 | Keine | 1106 | 1064 |
| Beschuss 4 | 0,0 | Keine | 770 | 807 |

### Gewerbliche Anwendbarkeit

Federn oder Drehstäbe, insbesondere als Schraubenfeder, Drehstabfeder und/oder Stabilisator der vorbeschriebenen Art werden in der Produktion von Kraftfahrzeugen, insbesondere von Fahrwerken der Kraftfahrzeuge eingesetzt.

### Bezugszeichenliste

- 2 =: Drehstab
- 3 =: Schraubenfeder
- 4 =: Stabilisator
- 5 =: Element einer Feder oder eines Drehstabs
- 6 =: Metallstab oder Metallrohr
- 7 =: Schichtüberzug

- DA =: Außendurchmesser des Metallstabs oder Metallrohrs
- SDA =: Außendurchmesser des Schichtüberzugs
- S =: Schichtdicke

## Patentansprüche

1. Elektrisch leitfähiges Bauteil (2, 3) insbesondere für Kraftfahrzeuge umfassend eine Oberfläche mit einem Schichtüberzug (7), wobei der Schichtüberzug (7) das geschmolzene und gehärtete Produkt einer Beschichtung mit einer Pulverzusammensetzung ist und der Schichtüberzug (7) eine Schichtdicke (S) aufweist, **dadurch gekennzeichnet, dass**
der Schichtüberzug (7) ein Einschichtüberzug ist und eine porenartige Schichtstruktur aufweist und die Schichtdicke (S) von größer als 150 µm aufweist, wobei die porenartige Schichtstruktur Poren mit einem mittleren Porendurchmesser von größer als 5 µm, vorzugsweise in einem Bereich zwischen 10 µm bis 250 µm, besonders bevorzugt in einem Bereich zwischen 15 µm bis 200 µm, ganz besonders bevorzugt in einem Bereich zwischen 20 µm bis 150 µm aufweist.

2. Elektrisch leitfähiges Bauteil (2, 3) nach Anspruch 1, **dadurch gekennzeichnet, dass** der Schichtüberzug (7) weniger als 3 Gewichts-% eines oder mehrerer Korrosionsinhibitors/en, bezogen auf den Schichtüberzug (7), umfasst.

3. Elektrisch leitfähiges Bauteil (2, 3) nach einem der Ansprüche 1 oder 2, **dadurch gekennzeichnet, dass** der Schichtüberzug (7) mit der porenartigen Schichtstruktur eine um mindestens 15 %, vorzugsweise 20 bis 70 %, besonders bevorzugt 25 bis 60 %, ganz besonders bevorzugt 30 bis 50 % verminderte Dichte in Bezug auf die Dichte des Schichtüberzugs (7) ohne die porenartige Schichtstruktur aufweist.

4. Elektrisch leitfähiges Bauteil (2, 3) nach einem der Ansprüche 1 bis 3, **dadurch gekennzeichnet, dass** der Schichtüberzug (7) mindestens 10 Gewichts-%, vorzugsweise 15 bis 90 Gewichts-%, besonders bevorzugt 20 bis 80 Gewichts-%, ganz besonders bevorzugt 25 bis 75 Gewichts-% einer Faserkomponente, bezogen auf den Schichtüberzug (7), aufweist.

5. Schichtüberzug (7) auf einer Oberfläche des elektrisch leitfähigen Bauteils (2, 3), insbesondere nach einem der Ansprüche 1 bis 4, wobei der Schichtüberzug (7) das geschmolzene und gehärtete Produkt einer Beschichtung mit einer Pulverzusammensetzung ist und der Schichtüberzug (7) eine Schichtdicke (S) aufweist, **dadurch gekennzeichnet, dass**
der Schichtüberzug (7) ein Einschichtüberzug ist und eine porenartige Schichtstruktur aufweist und die Schichtdicke (S) von größer als 150 µm aufweist, wobei die porenartige Schichtstruktur Poren mit einem mittleren Porendurchmesser von größer als 5 µm, vorzugsweise in einem Bereich zwischen 10 µm bis 250 µm, besonders bevorzugt in einem Bereich zwischen 15 µm bis 200 µm, ganz besonders bevorzugt in einem Bereich zwischen 20 µm bis 150 µm aufweist.

6. Schichtüberzug (7) nach Anspruch 5, **dadurch gekennzeichnet, dass** der Schichtüberzug (7) weniger als 3 Gewichts-% eines oder mehrerer Korrosionsinhibitors/en, bezogen auf den Schichtüberzug (7), umfasst.

7. Verfahren zum Beschichten einer Oberfläche des elektrisch leitfähigen Bauteils (2, 3), insbesondere nach einem der Ansprüche 1 bis 4, insbesondere für Kraftfahrzeuge mit den Schritten:
a) Bereitstellen eines elektrisch leitfähigen Bauteils (2, 3) mit einer Oberfläche ;
b) Bereitstellen einer Pulverzusammensetzung, umfassend wenigstens eine Bindemittelkomponente;
c) Vorbehandeln der Oberfläche des in Schritt a) bereitgestellten elektrisch leitfähigen Bauteils (2, 3), wobei das Vorbehandeln als ein mechanisches und/oder chemisches Vorbehandeln durchgeführt wird;
d) Trocknen der in Schritt c) vorbehandelten Oberfläche des elektrisch leitfähigen Bauteils (2, 3) wenigstens bis die Oberfläche des elektrisch leitfähigen Bauteils (2, 3) keine Flüssigkeit, insbesondere kein Wasser aufweist;
e) Pulverbeschichten der in Schritt d) getrockneten Oberfläche des elektrisch leitfähigen Bauteils (2, 3) mit der in Schritt b) bereitgestellten Pulverzusammensetzung umfassend
i. Aufladen der in Schritt b) bereitgestellten Pulverzusammensetzung;
ii. Erden des elektrisch leitfähigen Bauteils (2, 3) mit der in Schritt d) getrockneten Oberfläche und Herstellen eines elektrisch leitenden Bauteils (2, 3);
iii. Auftragen, insbesondere Sprühauftragen der in Schritt i. aufgeladenen Pulverzusammensetzung auf die in Schritt d) getrocknete Oberfläche des in Schritt ii. geerdeten elektrisch leitenden Bauteils (2, 3);
iv. Vernetzen, insbesondere Einbrennen der in Schritt iii. aufgetragenen Pulverzusammensetzung bei einer Vernetzungstemperatur unter Herstellen eines Schichtüberzugs (7), wobei eine pulverbeschichtete Oberfläche des elektrisch leitfähigen Bauteils (2, 3) erzeugt wird;
**dadurch gekennzeichnet, dass**
in Schritt b) eine Pulverzusammensetzung bereitgestellt wird, welche mindestens eine Treibmittelkomponente umfasst und das Pulverbeschichten in Schritt e) einschichtig durchgeführt wird und der in Schritt e) iv. hergestellte Schichtüberzug (7) einschichtig mit einer Schichtdicke (S) von größer als 150 µm ausgebildet wird, wobei der in Schritt e) iv. hergestellte Schichtüberzug (7) mit einer porenartigen Schichtstruktur ausgebildet wird und der in Schritt e) iv. hergestellte Schichtüberzug (7) mit der porenartigen ausgebildeten Schichtstruktur mit Poren mit einem mittleren Porendurchmesser von größer als 5 µm, vorzugsweise in einem Bereich zwischen 10 µm bis 250 µm, besonders bevorzugt in einem Bereich zwischen 15 µm bis 200 µm, ganz besonders bevorzugt in einem Bereich zwischen 20 µm bis 150 µm ausgebildet wird.

8. Verfahren nach Anspruch 7, **dadurch gekennzeichnet, dass** in Schritt b) eine Pulverzusammensetzung bereitgestellt wird, welche weniger als 3 Gewichts-% eines oder mehrerer Korrosionsinhibitors/en bezogen auf die Pulverzusammensetzung umfasst.

9. Verfahren nach einem der Ansprüche 7 bis 8, **dadurch gekennzeichnet, dass** bei dem Pulverbeschichten in Schritt e) der in Schritt e) iv. hergestellte Schichtüberzug (7) mit einer porenartigen Schichtstruktur ausgebildet wird und der in Schritt e) iv. hergestellte Schichtüberzug (7) mit der porenartigen ausgebildeten Schichtstruktur mit einer um mindestens 15 %, vorzugsweise 20 bis 70 %, besonders bevorzugt 25 bis 60 %, ganz besonders bevorzugt 30 bis 50 % verminderten Dichte in Bezug auf die Dichte des Schichtüberzugs (7) ohne die porenartige Schichtstruktur ausgebildet wird.

10. Verfahren nach einem der Ansprüche 7 bis 9, **dadurch gekennzeichnet, dass** das Erden des elektrisch leitfähigen Bauteils (2, 3) in Schritt e) ii) als ein Schritt weiter vorne in der Reihenfolge, insbesondere nach dem Bereitstellen des elektrisch leitfähigen Bauteils (2, 3) mit einer Oberfläche in Schritt a) erfolgt.

11. Verfahren nach einem der Ansprüche 7 bis 10, **dadurch gekennzeichnet, dass** vor dem Pulverbeschichten in Schritt e) in einem weiteren Schritt g) ein Erwärmen, insbesondere der in Schritt d) getrockneten Oberfläche des elektrisch leitfähigen Bauteils (2, 3) wenigstens auf eine Erwärmungstemperatur durchgeführt wird, wobei die Erwärmungstemperatur eine Temperatur in einem Bereich von 30 °C unterhalb der Gelierstarttemperatur bis zur Vernetzungsendtemperatur der in Schritt b) bereitgestellten Pulverzusammensetzung ist.

12. Verfahren nach einem der Ansprüche 7 bis 11, **dadurch gekennzeichnet, dass** in Schritt b) eine Pulverzusammensetzung bereitgestellt wird, welche wenigstens eine Faserkomponente umfasst und wobei bei dem Pulverbeschichten in Schritt e) der in Schritt e) iv. hergestellte Schichtüberzug (7) mit mindestens 10 Gewichts-%, vorzugsweise 15 bis 90 Gewichts-%, besonders bevorzugt 20 bis 80 Gewichts-%, ganz besonders bevorzugt 25 bis 75 Gewichts-% der Faserkomponente, bezogen auf den hergestellten Schichtüberzug (7) ausgebildet wird.

13. Verwendung eines Schichtüberzugs (7) nach einem der Ansprüche 5 bis 6, als korrosions- und abriebbeständiger Schutzüberzug für Oberflächen von elektrisch leitfähigen Bauteilen (2, 3) der Kraftfahrzeugindustrie, Elektro- und Elektronikindustrie, Maschinenbauindustrie, Luft- und Raumfahrt sowie für Oberflächen von elektrisch leitfähigen Bauteilen (2, 3) von Sportgeräten, wobei der Schichtüberzug (7) ein Einschichtüberzug ist und eine porenartige Schichtstruktur aufweist und die Schichtdicke (S) von größer als 150 µm aufweist, wobei die porenartige Schichtstruktur Poren mit einem mittleren Porendurchmesser von größer als 5 µm, vorzugsweise in einem Bereich zwischen 10 µm bis 250 µm, besonders bevorzugt in einem Bereich zwischen 15 µm bis 200 µm, ganz besonders bevorzugt in einem Bereich zwischen 20 µm bis 150 µm aufweist.

## Claims

1. Electrically conductive component (2, 3), especially for motor vehicles, comprising a surface having a layered covering (7), the layered covering (7) being the melted and cured product of coating with a powder composition, and the layered covering (7) having a layer thickness (S),
**characterized in that**
the layered covering (7) is a single-layer covering and comprises a porelike layer structure and has the layer thickness (S) of greater than 150 µm, the porelike layer structure comprising pores having a mean pore diameter of greater than 5 µm, preferably in a range between 10 µm to 250 µm, more preferably in a range between 15 µm to 200 µm, very preferably in a range between 20 µm to 150 µm.

2. Electrically conductive component (2, 3) according to Claim 1, **characterized in that** the layered covering (7) comprises less than 3 weight% of one or more corrosion inhibitors, based on the layered covering (7).

3. Electrically conductive component (2, 3) according to either of Claims 1 and 2, **characterized in that** the layered covering (7) with the porelike layer structure has a density reduced by at least 15%, preferably 20% to 70%, more preferably 25% to 60%, very preferably 30% to 50%, in relation to the density of the layered covering (7) without the porelike layer structure.

4. Electrically conductive component (2, 3) according to any of Claims 1 to 3, **characterized in that** the layered covering (7) comprises at least 10 weight%, preferably 15% to 90 weight%, more preferably 20% to 80 weight%, very preferably 25% to 75 weight% of a fibre component, based on the layered covering (7).

5. Layered covering (7) on a surface of the electrically conductive component (2, 3), more particularly according to any of Claims 1 to 4, the layered covering (7) being the melted and cured product of a coating with a powder composition, and the layered covering (7) having a layer thickness (S),
**characterized in that**
the layered covering (7) is a single-layer covering and comprises a porelike layer structure and has the layer thickness (S) of greater than 150 µm, the porelike layer structure comprising pores having a mean pore diameter of greater than 5 µm, preferably in a range between 10 µm to 250 µm, more preferably in a range between 15 µm to 200 µm, very preferably in a range between 20 µm to 150 µm.

6. Layered covering (7) according to Claim 5,
**characterized in that** the layered covering (7) comprises less than 3 weight% of one or more corrosion inhibitors, based on the layered covering (7).

7. Method for coating a surface of the electrically conductive component (2, 3), more particularly according to any of Claims 1 to 4, more particularly for motor vehicles, with the steps of:
a) providing an electrically conductive component (2, 3) having a surface;
b) providing a powder composition comprising at least one binder component;
c) pretreating the surface of the electrically conductive component (2, 3) provided in step a), said pretreating being carried out as a mechanical and/or chemical pretreating;
d) drying the surface of the electrically conductive component (2, 3), pretreated in step c), at least until the surface of the electrically conductive component (2, 3) comprises no liquid, more particularly no water;
e) powder-coating the surface of the electrically conductive component (2, 3), dried in step d), with the powder composition provided in step b), comprising
i. charging the powder composition provided in step b);
ii. grounding the electrically conductive component (2, 3) with the surface dried in step d) and producing an electrically conducting component (2, 3);
iii. applying, more particularly spray-applying, the powder composition charged in step i. to the surface, dried in step d), of the electrically conducting component (2, 3) grounded in step ii.;
iv. crosslinking, more particularly baking, the powder composition applied in step iii., at a crosslinking temperature, to produce a layered covering (7), wherein a powder-coated surface of the electrically conductive component (2, 3) is generated;
**characterized in that**
in step b) a powder composition is provided which comprises at least one expanding agent component, and the powder coating in step e) is carried out in single-layer form, and the layered covering (7) produced in step e) iv. is formed as one layer with a layer thickness (S) of greater than 150 µm, the layered covering (7) produced in step e) iv. being formed with a porelike layer structure and the layered covering (7) produced in step e) iv. with the porelike formed layer structure being formed with pores having a mean pore diameter of greater than 5 µm, preferably in a range between 10 µm to 250 µm, more preferably in a range between 15 µm to 200 µm, very preferably in a range between 20 µm to 150 µm.

8. Method according to Claim 7, **characterized in that** in step b) a powder composition is provided which comprises less than 3 weight% of one or more corrosion inhibitors, based on the powder composition.

9. Method according to either of Claims 7 and 8,
**characterized in that** in the powder coating in step e), the layered covering (7) produced in step e) iv. is formed with a porelike layer structure and the layered covering (7) produced in step e) iv., with the porelike formed layer structure, is formed with a density reduced by at least 15%, preferably 20% to 70%, more preferably 25% to 60%, very preferably 30% to 50%, in relation to the density of the layered covering (7) without the porelike layer structure.

10. Method according to any of Claims 7 to 9,
**characterized in that** the grounding of the electrically conductive component (2, 3) in step e) ii. takes place as a step further ahead in the sequence, more particularly after the providing of the electrically conductive component (2, 3) having a surface in step a).

11. Method according to any of Claims 7 to 10,
**characterized in that** before the powder coating in step e), in a further step g), a heating is carried out, more particularly of the surface, dried in step d), of the electrically conductive component (2, 3), at least to a heating temperature, the heating temperature being a temperature in a range from 30°C below the gelling onset temperature up to the final crosslinking temperature of the powder composition provided in step b).

12. Method according to any of Claims 7 to 11,
**characterized in that** in step b) a powder composition is provided which comprises at least one fibre component and wherein, during the powder coating in step e), the layered covering (7) produced in step e) iv. is formed with at least 10 weight%, preferably 15 to 90 weight%, more preferably 20 to 80 weight%, very preferably 25 to 75 weight% of the fibre component, based on the layered covering (7) produced.

13. Use of a layered covering (7) according to either of Claims 5 and 6, as a corrosion- and abrasion-resistant protective covering for surfaces of electrically conductive components (2, 3) in the automotive, electrical and electronics, and mechanical engineering industries, in aerospace, and also for surfaces of electrically conductive components (2, 3) of sports equipment, the layered covering (7) being a single-layer covering and comprising a porelike layer structure and having the layer thickness (S) of greater than 150 µm, the porelike layer structure comprising pores having a mean pore diameter of greater than 5 µm, preferably in a range between 10 µm to 250 µm, more preferably in a range between 15 µm to 200 µm, very preferably in a range between 20 µm to 150 µm.

## Revendications

1. Composant électriquement conducteur (2, 3), notamment pour des véhicules à moteur, comprenant une surface munie d'un revêtement en couche (7), le revêtement en couche (7) étant le produit fondu et durci d'un revêtement avec une composition de poudre, et le revêtement en couche (7) présentant une épaisseur de couche (S),
**caractérisé en ce que**
le revêtement en couche (7) est un revêtement monocouche et présente une structure de couche de type poreuse, et présente l'épaisseur de couche (S) de plus de 150 µm, la structure de couche de type poreuse comprenant des pores ayant un diamètre de pore moyen de plus de 5 µm, de préférence dans une plage allant de 10 µm à 250 µm, de manière particulièrement préférée dans une plage allant de 15 µm à 200 µm, de manière tout particulièrement préférée dans une plage allant de 20 µm à 150 µm.

2. Composant électriquement conducteur (2, 3) selon la revendication 1, **caractérisé en ce que** le revêtement en couche (7) comprend moins de 3 % en poids d'un ou de plusieurs inhibiteurs de corrosion, par rapport au revêtement en couche (7).

3. Composant électriquement conducteur (2, 3) selon l'une quelconque des revendications 1 ou 2, **caractérisé en ce que** le revêtement en couche (7) présentant la structure de couche de type poreuse présente une densité réduite d'au moins 15 %, de préférence de 20 à 70 %, de manière particulièrement préférée de 25 à 60 %, de manière tout particulièrement préférée de 30 à 50 %, par rapport à la densité du revêtement en couche (7) sans la structure de couche de type poreuse.

4. Composant électriquement conducteur (2, 3) selon l'une quelconque des revendications 1 à 3, **caractérisé en ce que** le revêtement en couche (7) comprend au moins 10 % en poids, de préférence 15 à 90 % en poids, de manière particulièrement préférée 20 à 80 % en poids, de manière tout particulièrement préférée 25 à 75 % en poids, d'un composant fibreux, par rapport au revêtement en couche (7).

5. Revêtement en couche (7) sur une surface du composant électriquement conducteur (2, 3), notamment selon l'une quelconque des revendications 1 à 4, dans lequel le revêtement en couche (7) est le produit fondu et durci d'un revêtement avec une composition en poudre, et le revêtement en couche (7) présente une épaisseur de couche (S),
**caractérisé en ce que**
le revêtement en couche (7) est un revêtement monocouche et présente une structure de couche de type poreuse, et présente l'épaisseur de couche (S) de plus de 150 µm, la structure de couche de type poreuse comprenant des pores ayant un diamètre de pore moyen de plus de 5 µm, de préférence dans une plage allant de 10 µm à 250 µm, de manière particulièrement préférée dans une plage allant de 15 µm à 200 µm, de manière tout particulièrement préférée dans une plage allant de 20 µm à 150 µm.

6. Revêtement en couche (7) selon la revendication 5,
**caractérisé en ce que** le revêtement en couche (7) comprend moins de 3 % en poids d'un ou de plusieurs inhibiteurs de corrosion, par rapport au revêtement en couche (7).

7. Procédé de revêtement d'une surface du composant électriquement conducteur (2, 3), notamment selon l'une quelconque des revendications 1 à 4, notamment pour des véhicules à moteur, comprenant les étapes suivantes :
a) la mise à disposition d'un composant électriquement conducteur (2, 3) comprenant une surface ;
b) la mise à disposition d'une composition de poudre, comprenant au moins un composant liant ;
c) le prétraitement de la surface du composant électriquement conducteur (2, 3) mis à disposition à l'étape a), le prétraitement étant réalisé sous la forme d'un prétraitement mécanique et/ou chimique ;
d) le séchage de la surface du composant électriquement conducteur (2, 3) prétraitée à l'étape c) au moins jusqu'à ce que la surface du composant électriquement conducteur (2, 3) ne comprenne plus de liquide, notamment plus d'eau ;
e) le revêtement avec une poudre de la surface du composant électriquement conducteur (2, 3) séchée à l'étape d) avec la composition de poudre mise à disposition à l'étape b), comprenant :
i. le chargement de la composition de poudre mise à disposition à l'étape b) ;
ii. la mise à la terre du composant électriquement conducteur (2, 3) comprenant la surface séchée à l'étape d) et la formation d'un composant électriquement conducteur (2, 3) ;
iii. l'application, notamment l'application par pulvérisation, de la composition de poudre chargée à l'étape i. sur la surface séchée à l'étape d) du composant électriquement conducteur (2, 3) mis à la terre à l'étape ii. ;
iv. la réticulation, notamment la cuisson, de la composition de poudre appliquée à l'étape iii. à une température de réticulation avec formation d'un revêtement en couche (7), une surface revêtue avec de la poudre du composant électriquement conducteur (2, 3) étant créée ;
**caractérisé en ce que**
à l'étape b), une composition de poudre qui comprend au moins un composant agent gonflant est mise à disposition, et le revêtement avec une poudre à l'étape e) est réalisé en une couche, et le revêtement en couche (7) formé à l'étape e) iv. est configuré en une couche d'une épaisseur de couche (S) de plus de 150 µm, le revêtement en couche (7) formé à l'étape e) iv. étant configuré avec une structure de couche de type poreuse, et le revêtement en couche (7) formé à l'étape e) iv. qui présente la structure de couche configurée sous forme poreuse étant configuré avec des pores ayant un diamètre de pore moyen de plus de 5 µm, de préférence dans une plage allant de 10 µm à 250 µm, de manière particulièrement préférée dans une plage allant de 15 µm à 200 µm, de manière tout particulièrement préférée dans une plage allant de 20 µm à 150 µm.

8. Procédé selon la revendication 7, **caractérisé en ce qu'**à l'étape b), une composition de poudre qui comprend moins de 3 % en poids d'un ou de plusieurs inhibiteurs de corrosion, par rapport à la composition de poudre, est mise à disposition.

9. Procédé selon l'une quelconque des revendications 7 à 8, **caractérisé en ce que**, lors du revêtement avec une poudre à l'étape e), le revêtement en couche (7) préparé à l'étape e) iv. est configuré avec une structure de couche de type poreuse, et le revêtement en couche (7) préparé à l'étape e) iv. qui présente la structure en couche configurée sous forme poreuse est configuré avec une densité réduite d'au moins 15 %, de préférence de 20 à 70 %, de manière particulièrement préférée de 25 à 60 %, de manière tout particulièrement préférée de 30 à 50 %, par rapport à la densité du revêtement en couche (7) sans la structure de couche de type poreuse.

10. Procédé selon l'une quelconque des revendications 7 à 9, **caractérisé en ce que** la mise à la terre du composant électriquement conducteur (2, 3) à l'étape e) ii. a lieu sous la forme d'une étape plus en amont dans la séquence, notamment après la mise à disposition du composant électriquement conducteur (2, 3) présentant une surface à l'étape a).

11. Procédé selon l'une quelconque des revendications 7 à 10, **caractérisé en ce qu'**avant le revêtement avec une poudre à l'étape e), un chauffage, notamment de la surface du composant électriquement conducteur (2, 3) séchée à l'étape d), au moins à une température de chauffage est réalisé lors d'une étape supplémentaire g), la température de chauffage étant une température dans une plage allant de 30 °C en dessous de la température de début de gélification jusqu'à la température de fin de réticulation de la composition de poudre mise à disposition à l'étape b).

12. Procédé selon l'une quelconque des revendications 7 à 11, **caractérisé en ce qu'**à l'étape b), une composition de poudre qui comprend au moins un composant fibreux est mise à disposition et, lors du revêtement avec une poudre à l'étape e), le revêtement en couche (7) préparé à l'étape e) iv. est configuré avec au moins 10 % en poids, de préférence 15 à 90 % en poids, de manière particulièrement préférée 20 à 80 % en poids, de manière tout particulièrement préférée 25 à 75 % en poids du composant fibreux, par rapport au revêtement en couche (7) préparé.

13. Utilisation d'un revêtement en couche (7) selon l'une quelconque des revendications 5 à 6 en tant que revêtement de protection résistant à la corrosion et à l'abrasion pour des surfaces de composants électriquement conducteurs (2, 3) de l'industrie des véhicules à moteur, l'industrie électrique et électronique, l'industrie de la construction de machines, l'industrie aéronautique et astronautique, ainsi que pour des surfaces de composants électriquement conducteurs (2, 3) d'appareils de sport, le revêtement en couche (7) étant un revêtement monocouche et présentant une structure de couche de type poreuse, et présentant l'épaisseur de couche (S) de plus de 150 µm, la structure de couche de type poreuse comprenant des pores ayant un diamètre de pore moyen de plus de 5 µm, de préférence dans une plage allant de 10 µm à 250 µm, de manière particulièrement préférée dans une plage allant de 15 µm à 200 µm, de manière tout particulièrement préférée dans une plage allant de 20 µm à 150 µm.
